# EUROPEAN PATENT SPECIFICATION

(11) **EP 3 121 329 B1**
(45) Date of publication and mention of the grant of the patent: **21.11.2018**
(21) Application number: 16180117.0
(22) Date of filing: 19.07.2016
(51) Int. Cl.: D06M 23/08, D06M 15/70, D06M 15/564, D06M 11/83, D06M 11/74, D06M 11/79, D06M 11/84, D06N 3/00, D06N 3/14, D06N 3/18, B64D 25/14, D06M 101/34

(54) **GAS BARRIER FABRIC**
GASBARRIEREGEWEBE
TISSU POUR BARRIÈRE À GAZ

(30) Priority: 20.07.2015 US 201514803887
(43) Date of publication of application: 25.01.2017
(73) Proprietor: Goodrich Corporation, Charlotte, NC 28217-4578 (US)
(72) Inventor: FANG, Xiaomei, Glastonbury, CT Connecticut 06073 (US); EASTMAN, Scott Alan, Glastonbury, CT Connecticut 06033 (US); ST. ROCK, Brian, Andover, CT Connecticut 06232 (US)
(74) Representative: Dehns

(56) References cited:
- WO-A1-2014/046708
- US-A1- 2010 096 597
- US-A1- 2014 134 354

## Description

### BACKGROUND

This disclosure relates to gas barrier fabrics, and more particularly to fabrics used for inflatable structures such as aircraft evacuation slides and life rafts, inflatable watercraft, cushions, displays, recreational structures, and other inflatable structures.

Inflatable structures are often made from fabric. Although fabrics offer benefits such as strength, flexibility, and ease of assembly using multiple pieces of fabric, the fabric must often be treated in order to provide necessary levels of permeability. Additionally, many applications impose additional requirements as well. For example, aircraft evacuation slides often must meet additional requirements imposed by regulations or customer requirements.

The requirement for reliably evacuating airline passengers in the event of an emergency is well known. Emergencies at take-off and landing often demand swift removal of the passengers from the aircraft because of the potential for injuries from fire, explosion, or sinking in water. A conventional method of quickly evacuating a large number of passengers from an aircraft is to provide multiple emergency exits, each of which is equipped with an inflatable evacuation slide, which often doubles as a life raft in the event of a water evacuation. These evacuation slides are most commonly constructed of an air barrier coated fabric material that is formed into a plurality of tubular members. When inflated, these tubular members form a self-supporting structure with a slide surface capable of supporting the passengers being evacuated. In addition to non-permeability, the fabric material from which the tubular members are constructed must meet FAA specification requirements of TSO-C69c for resistance to radiant heat, flammability, contaminants, fungus and other requirements.

Although evacuation slides permit passengers to quickly and safely descend from the level of the aircraft exit door to the ground, the requirement that each aircraft exit door be equipped with an inflatable evacuation slide means that substantial payload capacity must be devoted to account for the weight of multiple evacuation slides. Accordingly, there has long existed the desire in the industry to make the inflatable evacuation slides as light as possible. A significant portion of the weight of an emergency evacuation slide system is the weight of the slide fabric itself. Accordingly, various attempts have been made to reduce the weight of the slide fabric. One accepted method has been to reduce the physical size of the structural members of the slide by increasing the inflation pressure. Increased inflation pressure, however, causes greater stress on the slide fabric and, therefore, the benefit of the reduced physical size is at least partially cancelled out by the need to use a heavier gauge of slide fabric in order to withstand higher inflation pressures. Current state of the art slide fabric consists of a 72 x 72 yarns per 2.54 cm (inch) nylon cloth made of ultra-high-tenacity nylon fibers. This 72 x 72 fabric by itself has a grab tensile strength of approximately 172 kg (380 lbs) in the warp direction and 145 kg (320 lbs) in the fill direction (as used herein grab tensile strength refers to the strength measured by grabbing a sample of fabric, typically 10.16 cm (4 inches) wide, between a set of 2.54 cm (one inch) wide jaws and pulling to failure.) The fabric is typically coated with multiple layers of elastomeric polymers to render it impermeable to air as well as a radiant-heat-resistant coating. This results in a strong, but heavy fabric, having a grab tensile strength of approximately 177 kg (390 lbs) in the warp direction and in the fill direction, but with an areal weight that can exceed 237 g/m² (7.0 oz/yd²). As can be determined from the foregoing, these coatings do not contribute significantly to the strength of the fabric.

Fillers have been proposed for use in barrier fabric layers to inhibit permeability with a low contribution to overall fabric weight. However, some fillers can agglomerate in the coating composition, leading to coating defects that can inhibit barrier performance and flame resistance. High solvent levels in the coating composition can help reduce agglomerations, but can also cause low coating composition viscosity making the composition difficult to coat onto the fabric substrate. US 2014/134354 discloses a fabric comprising graphene nanoplatelets dispersed in a polymeric binder. US 2010/096597 discloses graphene-rubber nanocomposites. WO 2014/046708 discloses a multi-layer film, produced by a layer-by-layer process.

### BRIEF DESCRIPTION

In some aspects of the disclosure, a gas barrier fabric (also referred to herein as simply as a barrier fabric) comprises a fabric substrate. A heat-resistant coating layer disposed over a first side of the fabric substrate. A first gas barrier layer (also referred to herein as simply as a barrier layer) comprising a polymer is disposed over a second side of the fabric substrate. A second gas barrier layer is disposed over the first air barrier coating layer of the fabric substrate. The second barrier layer has a thickness of 5 nm to 1000 nm and comprises aligned nanoplatelets, and a polymer binder, wherein the second gas barrier layer comprises from 60 wt% to 99.5 wt% nanoplatelets, based on the weight of the second gas barrier layer.

In some aspects of the disclosure, an inflatable structure comprises an enclosure formed from the barrier fabric and a source of inflating gas inside the enclosure or a closeable opening for introducing inflating gas from outside the enclosure. In some aspects of the disclosure an inflatable aircraft slide comprises the inflatable structure herein described.

In some aspects of the disclosure, an aircraft slide comprises tubular members formed from the barrier fabric and a slide surface, which form a self-supporting structure when inflated.

### BRIEF DESCRIPTION OF THE DRAWINGS

The subject matter which is regarded as the present disclosure is particularly pointed out and distinctly claimed in the claims at the conclusion of the specification. The foregoing and other features, and advantages of the present disclosure are apparent from the following detailed description taken in conjunction with the accompanying drawings in which:
FIG. 1 is a schematic depiction of a cross-section of a barrier fabric as described herein;
FIG. 2 is a schematic depiction of a cross-section of a barrier fabric as described herein;
FIG. 3 is a schematic depiction of a cross-section of a barrier fabric as described herein;
FIG. 4 is a schematic depiction of a cross-section of a barrier fabric as described herein;
FIG. 5 is a side view of an aircraft evacuation slide as described herein; and
FIG. 6 is a bottom view of an aircraft evacuation slide as described herein.

### DETAILED DESCRIPTION

The fabric substrate, or base fabric, can be formed from any type of fiber possessing desired physical properties and processability. Nylon fibers are often used, at least in part due to the strength and strength to weight ratio possessed by nylon fabrics. Various nylons, such as nylon-6,6 or nylon-6, can be used, as well as other known nylon polymers. Other polymer fibers can also be used, such as polyester, other aromatic and/or aliphatic polyamides, liquid crystal polymers, etc. Natural fibers such as silk can also be used. Carbon fiber is also a viable option but is cost prohibitive in most applications. Fiber diameters can be selected to achieve desired properties such as fiber strength, elongation and environmental resistance and other attributes. Yarns are the assembly of individual fibers and can be assembled in a fashion as to align fibers parallel to each other, twist them or spin them together to form yarns of various strength, elongation, lay length, size, and denier (a characteristic of yarn as measured in grams per 9000 meters of yarn length). Fabrics can then be further defined in terms of fiber spacing, pics per 2.54 cm (inch), yarns per 2.54 cm (inch), or total fabric weight per 91.4 cm (yard) or other similar dimension. Yarn counts can range from 30x30 yarns per 2.54 cm (inch) to 90x90 yarns per 2.54 cm (inch), or higher, and more particularly from 40x40 yarns per 2.54 cm (inch) to 75x75 yarns per 2.54 cm (inch). The yarn count geometry can also be asymmetric (i.e. 40 x 60 yarns per 2.54 cm (inch)) if needed. Areal weight of the fabric substrate can range from 3.4 g/m² (0.1 oz/yd²) to greater than 339 g/m² (10 oz/yd²), more specifically 34 g/m² (1 oz/yd²) to 339 (10 oz/yd²), and even more specifically 68 g/m² (2 oz/yd²) to 271 g/m² (8 oz/yd²).

The fiber strength of the base cloth can be increased by incorporating nanoreinforcements into the polymeric matrix of the fiber itself. The nanoreinforcements can be carbon nanotubes, carbon nanofibers, graphene nanoplatelets, graphene oxide nanoplatelets, polymeric nanofibers, metallic nanotubes or nanofibers, metal oxide nanotubes, metal oxide nanofibers, metal oxide nanoparticles, metal oxide nanoplatelets, inorganic fibers such as glass, silicon carbide, aluminum nitride, inorganic nano platelets such as montmorillonite other clay or boron nitride or a combination thereof, or combinations thereof. The nanoreinforcements can be incorporated into the polymer matrix of the fiber during synthesis of the fiber matrix or processing of the matrix into fibers. For example, the nanoreinforcements can be combined with the neat polymer matrix prior to thermal processing into fibers by spinning or other fiber-forming processes. The nanoreinforcements can also be incorporated into the monomeric precursors used to synthesize the polymeric composition of the cloth fiber.

The heat-resistant (HR) coating layer is typically on the side of the fabric that will be the outside of the inflatable structure. The heat-resistant layer may comprise ceramic microspheres, ceramic hollow microspheres and/or aluminum in a polymer matrix. HR layers can comprise a high temperature polymer resin binder and aluminum pigment (e.g., aluminum flakes). HR layers can contain at least 5 wt.% aluminum pigment, more specifically from 10 wt.% to 50 wt.%. In addition to radiant heat reflecting properties provided by the aluminum pigment, a heat-resistant layer can also include heat-absorbing additives such as ceramic microspheres or heat-insulating additives such as ceramic hollow microspheres. An example formulation contains between 0.1 wt.% and 10 wt.% microspheres. A further exemplary formulation contains between 1 wt.% and 5 wt.% microspheres. All weight percentages are based on the total weight of the layer. The thickness of the HR layer can vary, for example between 0.5 µm to 50 µm, more specifically from 5 µm to 20 µm. Tie coat layers can also be present. Tie coats are utilized to provide greater adhesion to the substrate than might be provided by the various functional layers. For example, a polyurethane-polycarbonate copolymer resin can be used in a tie coat applied directly to the fabric surface where its relatively low modulus of elasticity provides good conformation of the resin to the cloth morphology while the relatively higher modulus of elasticity of a polyurethane polymer resin used as binder for a barrier layer provides the necessary strength and flexibility to maintain overall coating integrity and air impermeability when subjected to deformation and stress during inflation.

As mentioned above, the barrier fabric also has a first gas barrier layer comprising a polymer. This layer can have a thickness ranging from 1 µm to 100 µm, more specifically from 5 µm to 50 µm. In some aspects, the first barrier layer is free of nanoplatelets, or if it includes nanoplatelets, they are not in a state of alignment as described below. The polymer used for the heat-resistant layer, and also for other polymer-containing layers on the barrier fabric, can be chosen from various polymers. Polyurethane polymers and polyurethane-containing copolymers are often used, at least in part due their elasticity and durability. Well-known polyurethane chemistry allows for various aromatic and/or aliphatic polyisocyanates and polyols to be reacted together to provide desired coating characteristics, and such coating resins are readily commercially available. Other polymers can be readily copolymerized with polyurethanes, often through inclusion of hydroxy-terminated prepolymers (e.g., OH-terminated polyester or OH-terminated polycarbonate or polyether) in the polyisocyanate/polyol reaction mix. In some embodiments, a polymer other than polyurethane is used, e.g., polyester. Blends of one or more of polymer resins such as those described above can also be included in a coating composition.

The coating compositions used to form the layer(s) on the barrier fabric can also contain one or more crosslinkers. For example, urethane and polyester resins can include polyfunctional alcohols (e.g., trimethylolpropane) or poly-functional alcohol reactive compounds (e.g., melamine derivatives such as hexamethoxymethylol melamine or melamine resin) or polycarbodiimides as crosslinking agents. Polyurethane resins can also include polyfunctional isocyanates (e.g., trifunctional isocyanurate compounds formed by diisocyanates such as methylenediphenyl diisocyanate (MDI) or isophorone diisocyanate (IPDI)) as crosslinkers. Polyesters can also include polyfunctional acids (e.g., tricarballylic acid) as crosslinkers. The amount of crosslinker can be adjusted by those skilled in the art to achieve desired properties. In addition to accelerating cure, added crosslinker tends to increase coating hardness and decrease elasticity. The coating composition may also contain one or more volatile liquids, including water and/or various polar or non-polar organic solvents. Such volatile liquids are vaporized before or during cure and do not form part of the cured or finished coating. Reactive diluents (i.e., organic compounds that function as a solvent during application of a polymer resin-containing coating composition, but have functional groups that react with the polymer during cure so that they form part of the cured coating.

The coating compositions applied to form the any of the coatings on the fabric described herein can include various additives ordinarily incorporated into coating compositions. Such additives can be mixed at a suitable time during the mixing of the components for forming the composition, and include fillers, reinforcing agents, antioxidants, heat stabilizers, biocides, plasticizers, lubricants, antistatic agents, colorants, surface effect additives, radiation light stabilizers (including ultraviolet (UV) light stabilizers), stabilizers, and flame retardants. Such additives can be used in various amounts, generally from 0.01 to 35 wt.%, based on the total weight of the coating composition.

As mentioned above, the barrier fabric also includes a second barrier layer having a thickness of 5 nm to 1000 nm comprising aligned nanoplatelets. The second air barrier layer further comprises a polymer binder. The second barrier layer may be subjected to applied force prior to curing the polymer binder. The barrier fabric may further comprise a third air barrier layer comprising a polymer over the second air barrier layer. The barrier fabric may further comprise a third air barrier layer comprising aligned nanoplatelets over the heat-resistant layer. Nanoplatelets can be prepared in various sizes, and those used in the barrier layer described herein can have a thickness ranging from a minimum of 0.3 nm, more specifically 1 nm, and even more specifically 5 nm, up to a maximum of 100 nm, more specifically 50 nm, and even more specifically 15 nm. These maximum and minimum range limits can be combined to create ranges from any of the minimum values to any of the maximum values (e.g., 0.3-100 nm, 5-15 nm, 1-50 nm, 1-15 nm, etc.). The nanoplatelets can have diameters ranging from 0.1 µm to 50 µm, more particularly from 5 µm to 25 µm. As used herein, the term "diameter", with respect to nanoplatelets, means an average diameter that is calculated as the diameter of a circle having an area the same as that of a flat (i.e., not including surface area in pores) surface occupying the same profile in the x-y direction as one of the faces of the nanoplatelet. The nanoplatelets can have an aspect ratio (ratio of diameter to thickness) ranging from 5:1 to 10,000:1, more specifically from 20:1 to 1000:1. The barrier layer comprises at least 60 wt.% nanoplatelets, based on the total weight of the barrier layer (i.e., the cured coating), more specifically at least 85 wt.% nanoplatelets. In some example embodiments, barrier layer has an upper limit on nanoplatelet content of 99.5 wt.% nanoplatelets, more specifically 90 wt.% nanoplatelets, and even more specifically 85 wt.% nanoplatelets. These maximum and minimum range limits can be combined to create ranges from any of the minimum values to any of the maximum values (e.g., 0.3-100 nm, 5-15 nm, 1-50 nm, 1-15 nm, etc.), excluding of course impossible range values where a minimum value would be higher than a maximum value.

The nanoplatelets can comprise various materials, including but not limited to ceramics, clays (e.g. nanoscopic clays), graphene, or graphene oxide, especially clays, graphene, or graphene oxide. Examples of nanoplatelet materials include, but are not limited to graphene, phyllosilicate clays such as Montmorillonite clay, Kaolinite clay, boron nitride, mica. Nanoplatelets can be prepared from bulk materials such as graphite, bulk clays, boron nitride, mica by exfoliating the bulk material. Exfoliation can be carried out by various techniques such as ultrasonic treatment, chemical treatments to swell the bulk material to increase separation between adjacent molecular layers, and treatment with oxidants, or ion intercalation/exchange. Surface treatments, heat, or high shear mixing or mechanical work can be applied to promote exfoliation of platelet layers. Specific solvents can also be employed to reach desired exfoliation level.

The various coatings described herein can be applied using any known coating technique, including but not limited to roll coating, spray coating, dip coating, or brush coating. The nanoplatelet-containing layer can be formed at thicknesses of 5 nm to 1000 nm, more specifically from 10 nm to 800 nm by similar techniques mentioned above including but not limited to roll coating, spray coating, dip coating, or brush coating, optionally followed by processing with an air blade or physical blade to achieve the desired thickness. Coating solutions can be comprised of neat, curable polymer resin, solvent based or aqueous based coating systems. The concentrations of the coating solutions will vary depending on the required viscosity of the solution, how thick the coating is to be applied, and how many nanoplatelet layers are to be applied in one coating pass. Typically concentrations of binder and filler are very low in solvent and aqueous coating systems to allow for better alignment of filler. The nanoplatelets may be deposited by a self-assembly coating process, e.g. layer-by-layer self-assembly.

As mentioned above, the nanoplatelets are aligned. As used herein, "alignment" of the nanoplatelets means that the x-y dimension of nanoplatelets is aligned parallel to the plane of the layer surface. Complete alignment of the nanoplatelets is not required, only that more of the nanoplatelets are more closely aligned in a direction parallel to the layer compared to a random alignment of the nanoplatelets. Alignment can be characterized by Hermans orientation parameter φ_{p,p} as is known in the art, with a value of 0 representing random alignment of the particles, a value of 1 representing complete alignment of the particles in the direction of layer, and a value of -1/2 representing complete alignment of the particles perpendicular to the direction of the layer. In exemplary embodiments, φ_{p,p} is in a range having a lower level greater than 0, more specifically 0.1, and even more specifically 0.4 . The upper end of the range, for which φ_{p,p} is less than or equal to, can be 0.9, more specifically 0.8, and more specifically 0.7. Alignment of the nanoplatelets can be achieved by using known layer-by-layer self-assembly techniques where the nanoplatelets are derivatized with charged groups such as carboxyl groups that will be attracted to an oppositely-charged groups on a substrate such as a amine groups on the first barrier layer over which the nanoplatelets dispersed in a solvent are applied. In other embodiments, the nanoplatelets can be incorporated into a curable polymer coating composition, with alignment of the nanoplatelets achieved by applying physical force prior to fully curing the polymer. Examples of physical force include centrifugal force, gravity, and/or shearing force (e.g., by maintaining the coated substrate in a vertical position for a period of time) prior to curing. Derivatization techniques described above used for layer-by-layer self-assembly can also be used provide alignment in polymer coating compositions.

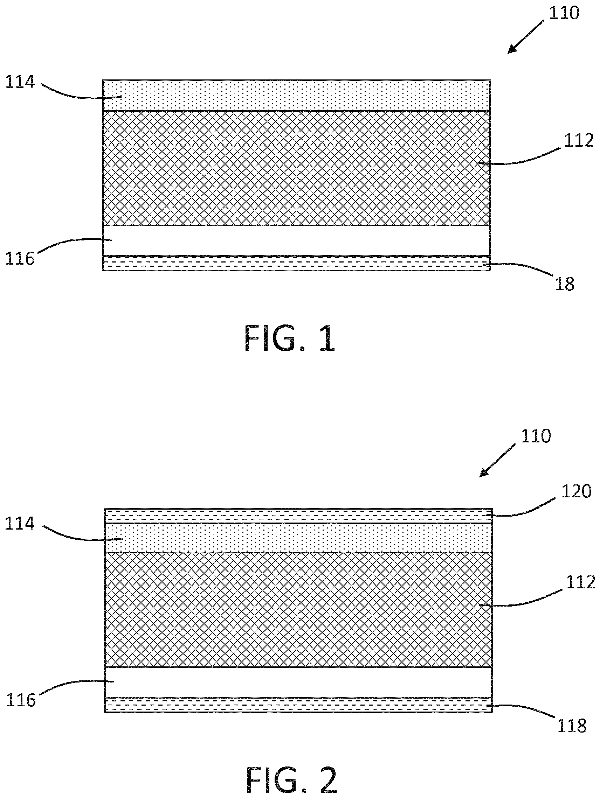

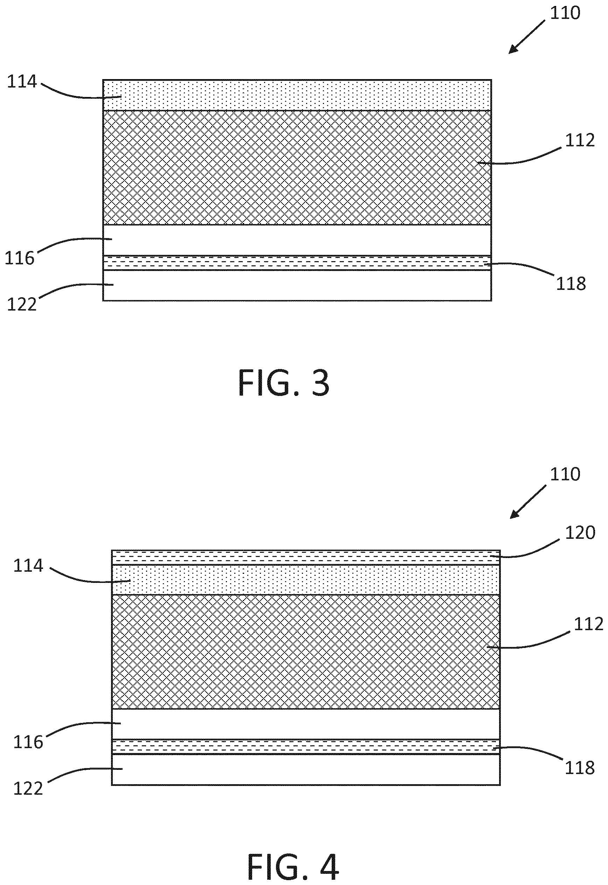

Turning now to the Figures, FIG. 1 schematically depicts a cross-section of an example barrier fabric. As shown in FIG. 1, a gas barrier fabric 100 comprises a fabric substrate 112. On one side of substrate 112 is a heat-resistant layer 114. On the other side of substrate 12 is a first barrier layer 16. Over the first barrier layer 116 is a second barrier layer 118 comprising aligned nanoplatelets as described above. FIG. 2 depicts a barrier fabric configured similarly to FIG. 1, with the addition of a third barrier layer 120 comprising aligned nanoplatelets over the heat-resistant layer 114. FIG. 3 depicts a barrier fabric configured similarly to FIG. 1, with the addition of a conventional polymer barrier layer 122 over the barrier layer 118 comprising aligned nanoplatelets. FIG. 4 includes both the barrier layer 120 and the barrier layer 122. The barrier layers 116 and 122 can comprise crosslinked polyurethane coating(s) or a crosslinked polyurethane coating with a thermoplastic urethane film. The barrier layer 122 can comprise a thermoplastic urethane film.

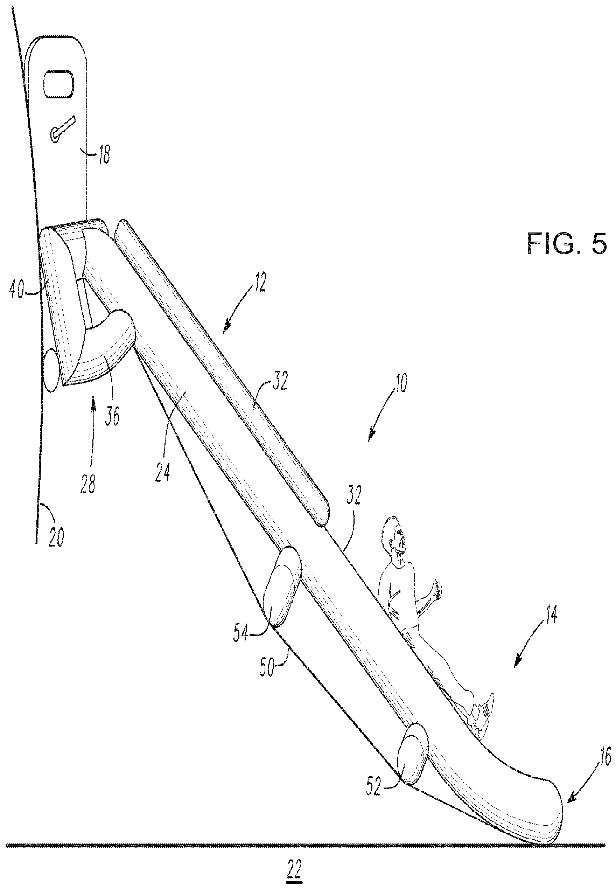

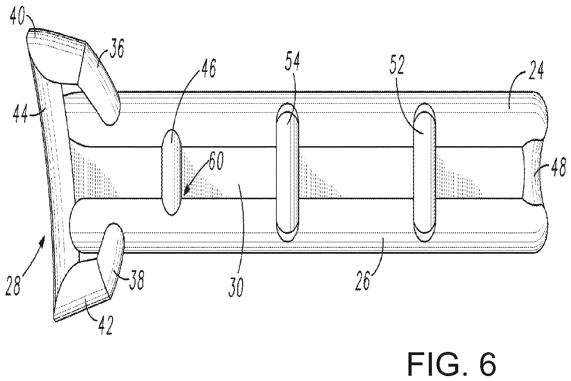

With reference to FIGS. 5 and 6, the main body of evacuation slide assembly 10 comprises a plurality of inflatable flexible members including side rail tubes 24, 26 which extend from head end truss assembly 28 to the ground 22. A slide surface 30 comprising a fabric membrane is stretched between side rail tubes 24 and 26 to provide a sliding surface for the disembarking passengers. A right hand rail 32 and a left hand rail (not shown) are positioned atop side rail tubes 24 and 26, respectively, to provide a hand hold for passengers descending evacuation slide assembly 10. Head end truss assembly 28 comprises a plurality of strut tubes 36, 38, upright tubes 40, 42 and a transverse tube 44 adapted to hold head end 12 of evacuation slide assembly 10 against the fuselage of aircraft 20 in an orientation to permit escape slide assembly 10 to unfurl in a controlled manner as it extends toward the ground. The spaced apart configuration of side rail tubes 24 and 26 is maintained by a head end transverse tube 46, a toe end transverse tube 48, a foot end transverse truss 52 and medial transverse truss 54. The bending strength of escape slide assembly 10 is enhanced by means of one or more tension straps 50 stretched from toe end 16 over foot end transverse truss 52, medial transverse truss 54 and attached proximal head end 12 of evacuation slide assembly 10.

The entire inflatable evacuation slide assembly 10 can be fabricated from the barrier fabric described herein. The various parts of the inflatable evacuation slide assembly 10 may be joined together with a suitable adhesive whereby the structure will form a unitary composite structure capable of maintaining its shape during operation. The entire structure of the inflatable evacuation slide assembly 10 can be formed such that all of the chambers comprising the structure are interconnected pneumatically, such that a single pressurized gas source, such as compressed carbon dioxide, nitrogen, argon, a pyrotechnic gas generator or combination thereof may be utilized for its deployment. Of course, the depiction in FIGS. 4 and 5 is an example, and other designs can be utilized. For example, round tubular structures are depicted in FIGS. 5 and 6, but other shapes such as inflatable square tube shapes can be fabricated by known techniques.

## Claims

1. A gas barrier fabric, comprising:
a fabric substrate;
a heat-resistant coating layer over a first side of the fabric substrate;
a first gas barrier layer comprising a polymer disposed over a second side of the fabric substrate; and
a second gas barrier layer over the first gas barrier coating layer of the fabric substrate having a thickness of 5 nm to 1000 nm comprising aligned nanoplatelets, and a polymer binder, wherein the second gas barrier layer comprises from 60 wt% to 99.5 wt% nanoplatelets, based on the weight of the second gas barrier layer.

2. The barrier fabric of claim 1, wherein the fabric substrate comprises fibres with a yarn count of 11.8 x 11.8 yarns per cm to 35.4 x 35.4 yarns per cm.

3. The gas barrier fabric of claim 1 or claim 2, wherein the second gas barrier layer comprises from 85 wt.% to 99.5 wt.% of the nanoplatelets, based on the weight of the second gas barrier layer.

4. The barrier fabric of any one of claims 1 to 3, wherein alignment of the nanoplatelets in the second barrier layer is achieved by applying physical force prior to curing the polymer binder.

5. The barrier fabric of any one of claims 1 to 4, wherein the nanoplatelets are deposited by a self-assembly coating process.

6. The barrier fabric of claim 5, wherein the self-assembly coating process is layer-by-layer self-assembly.

7. The barrier fabric of any of claims 1-6, wherein the nanoplatelets are selected from graphene, graphene oxide, nanoscopic clays, or ceramics.

8. The barrier fabric of any of claims 1-7, wherein the nanoplatelets have a diameter of from 0.1 µm to 50 µm.

9. The barrier fabric of any of claims 1-8, wherein the nanoplatlets have an aspect ratio of from 5:1 to 10,000:1.

10. The barrier fabric of any of claims 1-9, further comprising a third air barrier layer comprising a polymer over the second air barrier layer.

11. The barrier fabric of any of claims 1-10, further comprising a third air barrier layer comprising aligned nanoplatelets over the heat-resistant layer.

12. The barrier fabric of any of claims 1-11, wherein the heat-resistant layer comprises ceramic microspheres, ceramic hollow microspheres and/or aluminum in a polymer matrix.

13. An inflatable structure, comprising an enclosure formed from the barrier fabric of any of claims 1-12 and a source of inflating gas inside the enclosure or a closeable opening for introducing inflating gas from outside the enclosure.

14. An inflatable aircraft slide, comprising an inflatable structure according to claim 13.

15. An inflatable aircraft slide, comprising inflatable tubular members formed from the barrier fabric of any of claims 1-12 and a slide surface, which form a self-supporting structure when inflated.

## Patentansprüche

1. Gasbarrieregewebe, das Folgendes umfasst:
ein Gewebesubstrat;
eine hitzebeständige Beschichtung über einer ersten Seite des Gewebesubstrats;
eine erste Gasbarriereschicht, die ein Polymer, angeordnet über einer zweiten Seite des Gewebesubstrats, umfasst; und
eine zweite Gasbarriereschicht über der ersten Gasbarriereschicht des Gewebesubstrats, die eine Dicke von 5 nm bis 1000 nm aufweist und ausgerichtete Nanoplättchen und ein Polymerbindemittel umfasst, wobei die zweite Gasbarriereschicht Nanoplättchen zwischen 60 Gew.% und 99,5 Gew.% umfasst, basierend auf dem Gewicht der zweiten Gasbarriereschicht.

2. Barrieregewebe nach Anspruch 1, wobei das Gewebesubstrat Fasern mit einer Fadenfeinheit von 11,8 x 11,8 Faden pro cm bis 35,4 x 35,4 Faden pro cm umfasst.

3. Gasbarrieregewebe nach Anspruch 1 oder 2, wobei die zweite Gasbarriereschicht Nanoplättchen zwischen 85 Gew.% und 99,5 Gew.% umfasst, basierend auf dem Gewicht der zweiten Gasbarriereschicht.

4. Barrieregewebe nach einem der Ansprüche 1 bis 3, wobei die Ausrichtung der Nanoplättchen in der zweiten Barriereschicht durch Anwenden einer physikalischen Kraft, vor dem Härten des Polymerbindemittels, erreicht wird.

5. Barrieregewebe nach einem der Ansprüche 1 bis 4, wobei die Nanoplättchen durch ein selbstorganisierendes Beschichtungsverfahren angeordnet werden.

6. Barrieregewebe nach Anspruch 5, wobei das selbstorganisierende Beschichtungsverfahren eine selbstorganisierende Schicht-für-Schicht-Anordnung ist.

7. Barrieregewebe nach einem der Ansprüche 1 bis 6, wobei die Nanoplättchen aus Graphen, Graphenoxid, nanoskopischen Tonen oder Keramik ausgewählt werden.

8. Barrieregewebe nach einem der Ansprüche 1 bis 7, wobei die Nanoplättchen einen Durchmesser von 0,1 µm bis 50 µm aufweisen.

9. Barrieregewebe nach einem der Ansprüche 1 bis 8, wobei die Nanoplättchen ein Seitenverhältnis von 5:1 bis 10.000:1 aufweisen.

10. Barrieregewebe nach einem der Ansprüche 1 bis 9, ferner eine dritte Gasbarriereschicht umfassend, welche ein Polymer über der zweiten Gasbarriereschicht umfasst.

11. Barrieregewebe nach einem der Ansprüche 1 bis 10, ferner eine dritte Gasbarriereschicht umfassend, die ausgerichtete Nanoplättchen über der hitzebeständigen Schicht umfasst.

12. Barrieregewebe nach einem der Ansprüche 1 bis 11, wobei die hitzebeständige Schicht keramische Mikrokugeln, hohle keramische Mikrokugeln und/oder Aluminium in einer Polymermatrix umfasst.

13. Aufblasbare Struktur, die eine Umhüllung umfasst, die durch das Barrieregewebe nach einem der Ansprüche 1 bis 12 und einer Quelle eines Aufblasgases innerhalb der Umhüllung oder einer verschließbaren Öffnung zum Einlassen eines Aufblasgases von außerhalb der Umhüllung gebildet wird.

14. Aufblasbare Flugzeugrutsche, die eine aufblasbare Struktur nach Anspruch 13 umfasst.

15. Aufblasbare Flugzeugrutsche, die aufblasbare rohrförmige Elemente, die aus dem Barrieregewebe nach einem der Ansprüche 1 bis 12 gebildet werden, und eine Rutschfläche umfassen, die im aufgeblasenen Zustand eine selbsttragende Struktur bilden.

## Revendications

1. Tissu pour barrière à gaz, comprenant :
un substrat en tissu ;
une couche de revêtement résistante à la chaleur sur un premier côté du substrat en tissu ;
une première couche pour barrière à gaz comprenant un polymère disposé sur un second côté du substrat en tissu ; et
une seconde couche pour barrière à gaz sur la première couche de revêtement pour barrière à gaz du substrat en tissu ayant une épaisseur de 5 nm à 1000 nm comprenant des nanoplaquettes alignées, et un liant polymère, dans lequel la seconde couche pour barrière à gaz comprend de 60 % en poids à 99,5 % en poids de nanoplaquettes, sur la base du poids de la seconde couche pour barrière à gaz.

2. Tissu pour barrière selon la revendication 1, dans lequel le substrat en tissu comprend des fibres comportant un nombre de fils de 11,8 x 11,8 fils par cm à 35,4 x 35,4 fils par cm.

3. Tissu pour barrière à gaz selon la revendication 1 ou la revendication 2, dans lequel la seconde couche pour barrière à gaz comprend de 85 % en poids à 99,5 % en poids de nanoplaquettes, sur la base du poids de la seconde couche pour barrière à gaz.

4. Tissu pour barrière selon l'une quelconque des revendications 1 à 3, dans lequel l'alignement des nanoplaquettes dans la seconde couche pour barrière est réalisé en appliquant une force physique avant le durcissement du liant polymère.

5. Tissu pour barrière selon l'une quelconque des revendications 1 à 4, dans lequel les nanoplaquettes sont déposées par un processus de revêtement par auto-assemblage.

6. Tissu pour barrière selon la revendication 5, dans lequel le processus de revêtement par auto-assemblage est un auto-assemblage couche par couche.

7. Tissu pour barrière selon l'une quelconque des revendications 1 à 6, dans lequel les nanoplaquettes sont sélectionnées parmi le graphène, l'oxyde de graphène, des argiles nanoscopiques, ou des céramiques.

8. Tissu pour barrière selon l'une quelconque des revendications 1 à 7, dans lequel les nanoplaquettes ont un diamètre de 0,1 µm à 50 µm.

9. Tissu pour barrière selon l'une quelconque des revendications 1 à 8, dans lequel les nanoplaquettes ont un rapport d'aspect de 5:1 à 10000:1.

10. Tissu pour barrière selon l'une quelconque des revendications 1 à 9, comprenant en outre une troisième couche pour barrière à l'air comprenant un polymère sur la seconde couche pour barrière à l'air.

11. Tissu pour barrière selon l'une quelconque des revendications 1 à 10, comprenant en outre une troisième couche pour barrière à l'air comprenant des nanoplaquettes alignées sur la couche résistant à la chaleur.

12. Tissu pour barrière selon l'une quelconque des revendications 1 à 11, dans lequel la couche résistant à la chaleur comprend des microsphères de céramique, des microsphères de céramique creuses et/ou de l'aluminium dans une matrice polymère.

13. Structure gonflable, comprenant une enceinte formée par le tissu pour barrière selon l'une quelconque des revendications 1 à 12 et une source de gaz de gonflage à l'intérieur de l'enceinte ou une ouverture pouvant être fermée pour introduire un gaz de gonflage depuis l'extérieur de l'enceinte.

14. Toboggan d'évacuation d'avion gonflable, comprenant une structure gonflable selon la revendication 13.

15. Toboggan d'évacuation d'avion gonflable, comprenant des éléments tubulaires gonflables formés à partir du tissu pour barrière selon l'une quelconque des revendications 1 à 12 et une surface de toboggan, qui forme une structure autoportante lorsqu'elle est gonflée.
